# EUROPÄISCHE PATENTSCHRIFT

(11) **EP 3 010 759 B1**
(45) Veröffentlichungstag und Bekanntmachung des Hinweises auf die Patenterteilung: **29.04.2020**
(21) Anmeldenummer: 14729259.3
(22) Anmeldetag: 02.06.2014
(51) Int. Cl.: B60Q 1/44, B60Q 1/30

(54) **VERFAHREN UND VORRICHTUNG ZUM STEUERN EINER LICHTEMISSION EINER HECKLEUCHTE EINES FAHRZEUGS**
METHOD AND DEVICE FOR CONTROLLING THE LIGHT EMISSION OF A REAR LAMP OF A VEHICLE
PROCÉDÉ ET DISPOSITIF POUR LA COMMANDE D'UNE ÉMISSION DE LUMIÈRE D'UN FEU ARRIÈRE D'UN VÉHICULE

(30) Priorität: 20.06.2013 DE 102013010333
(43) Veröffentlichungstag der Anmeldung: 27.04.2016
(73) Patentinhaber: Volkswagen Aktiengesellschaft, 38440 Wolfsburg (DE)
(72) Erfinder: SOLA GOMFAUS, Andreu, 38446 Wolfsburg (DE); WERNER, Michael, 38104 Braunschweig (DE); MÜLLER, Michael, 38518 Gifhorn (DE); THAMM, Mathias, 39646 Oebisfelde (DE); MENSCH, Daniel, 38442 Wolfsburg (DE); KIEL, Henning, 38444 Wolfsburg (DE)
(86) Internationale Anmeldenummer: PCT/EP2014/061300
(87) Internationale Veröffentlichungsnummer: WO 2014/202372

(56) Entgegenhaltungen:
- EP-A1- 1 892 147
- WO-A1-2004/106113
- WO-A1-2009/093788
- WO-A1-2011/061617
- DE-A1- 19 945 775
- US-A- 5 463 370
- US-A1- 2011 304 455

## Beschreibung

Die vorliegenden Erfindung betrifft ein Verfahren zum Steuern einer Lichtemission einer Heckleuchte eines Fahrzeugs, wobei die Heckleuchte optische Komponenten mit Abstrahlflächen mit zumindest drei Teilabstrahlflächen umfasst und wobei über die Lichtemission der Abstrahlflächen zumindest eine erste und eine zweite Lichtfunktion erzeugbar ist. Ferner betrifft die Erfindung eine Vorrichtung zum Steuern der Lichtemission einer Heckleuchte eines Fahrzeugs.

Bei der Neugestaltung von Fahrzeugen ergibt sich das Problem, dass aufgrund der gewünschten Aerodynamik und des gewünschten Designs die Bauraumverhältnisse für Leuchteinrichtungen, insbesondere für die Heckleuchten, Scheinwerfer und Rückstrahler, sehr knapp bemessen sind. Die Signalwirkung einer Leuchte wird jedoch von der Umfangsgröße der Abstrahlfläche und von der Leuchtdichte bestimmt. Des Weiteren tragen die Leuchteinrichtungen des Fahrzeugs in erheblichem Maße zum Design des Fahrzeugs bei. Durch die Gestaltung der Leuchteinrichtungen soll dem Fahrzeug vielfach ein charakteristisches Erscheinungsbild verliehen werden, welches leicht wiedererkannt wird. Ferner ergibt sich das Problem, dass die Kosten für die Herstellung der Leuchten so gering wie möglich sein sollen.

Aus der DE 196 05 813 A1 ist eine Signalabgabevorrichtung bekannt, die vom Betriebszustand des Fahrzeugs abhängige Signale abgibt. Dabei sind an der Rückseite des Fahrzeugs in immer größer werdenden Abständen zum Boden zusätzliche Lichtemissionsbereiche angebracht, die bei einer bestimmten Bremsstärke aufleuchten.

Die DE 100 05 499 A1 beschreibt eine Vorrichtung zur Anzeige unterschiedlicher Stufen der Bremsstärke für Fahrzeuge aller Art. Dabei wird die Leuchtfläche umso größer, je stärker die Bremskraft ist.

Weiterhin ist aus der WO 2009/093788 A1 ein Bremslicht bekannt, das es dem Fahrer eines folgenden Fahrzeugs ermöglicht, den Grad der Geschwindigkeitsreduktion des vorausfahrenden Fahrzeugs entsprechend der Größenordnung der Bremskraft zu erkennen. Mit zunehmender Bremskraft werden horizontale Reihen von Lichtquellen als Bremslicht zugeschaltet.

Außerdem beschreibt die DE 10 2006 046 170 A1 eine Lichteinheit mit matrixartig angeordneten Lichtquellen. Der Licht-Flächenbereich der Lichteinheit kann dabei durch ein an und ausschalten von Reihen der Lichtquellenmatrix verändert werden.

Die EP 0 813 996 B1 beschreibt ein Verfahren zur Anzeige der Bremsstärke oder Verzögerung eines Fahrzeugs. Dabei bewegen sich die Leuchtschwerpunkte von jeweils einer Bremsleuchte zugeordneten, aufleuchtenden Fläche mit zunehmender Bremsstärke auseinander.

Ferner ist aus der DE 198 45 679 A1 ein Leuchtensystem für Kraftfahrzeuge mit mindestens einer Bremsleuchte bekannt, wobei die Bremsleuchte in Abhängigkeit von der Bremsstärke unterschiedliche Lichtsignale abgibt.

Die DE 20 12 484 A1 beschreibt eine Bremseinrichtung, die als Mehrstufenbremssystem ausgebildet ist. Das Bremslicht der Bremseinrichtung ist dabei in drei Kammern aufgeteilt. Bei zunehmender Leuchtkraft werden erst eine, dann zwei und schließlich drei Kammern beleuchtet.

Die DE 35 16 118 A1 beschreibt eine Vorrichtung zur Bremsanzeige mit mehreren, nebeneinander angeordneten Bremsleuchten. Diese werden in Abhängigkeit von der Bremsbetätigungskraft auf einen Druckgeber zunehmend zugeschaltet.

Schließlich ist aus der DE 199 45 775 A1 und der DE 1 892 147 A1 jeweils eine Vorrichtung und ein Verfahren gemäß dem Oberbegriff des Anspruchs 1 bzw. des Anspruchs 11 bekannt. Aus letzterem Dokument ist weiterhin bekannt, dass nach einem Umschaltvorgang von der Schlusslichtfunktion auf die Bremslichtfunktion die Lichtemission einer gemeinsamen Teilabstrahlfäche erhöht ist und eine Teilabstrahlfäche, die für die Schlusslichtfunktion kein Licht emittiert, Licht für die Bremslichtfunktion emittiert.

Der vorliegenden Erfindung liegt das technische Problem zugrunde, ein Verfahren und eine Vorrichtung bereitzustellen, die eine hohe Signalwirkung einer Heckleuchte eines Fahrzeugs ermöglichen, wobei der Bauraum des Fahrzeugs optimal ausgenutzt wird.

Erfindungsgemäß wird diese Aufgabe durch ein Verfahren mit den Merkmalen des Anspruchs 1 und einer Vorrichtung mit den Merkmalen des Anspruchs 11 gelöst.

Das erfindungsgemäße Verfahren ist dadurch gekennzeichnet, dass nach einem Umschaltvorgang von der ersten auf die zweite Lichtfunktion die erste Teilabstrahlfläche, die für die erste Lichtfunktion Licht emittiert, kein Licht mehr emittiert, die zweite Lichtabstrahlfläche, die für die erste Lichtfunktion Licht emittiert, weiterhin Licht emittiert und die dritte Teilabstrahlfläche, die für die erste Lichtfunktion kein Licht emittiert, Licht emittiert. Durch das erfindungsgemäße Verfahren wird vorteilhafterweise die Signalwirkung dadurch erhöht, dass ein Teil einer ersten Lichtfunktion ausgeschaltet wird und eine Teilabstrahlfläche, die bei der ersten Lichtfunktion nicht leuchtet, beleuchtet wird. Dadurch wird einerseits einem Umschalten auf eine zweite Lichtfunktion unterbewusst mehr Aufmerksamkeit geschenkt. Andererseits kann ein Zusammenhang zwischen beiden Lichtfunktionen hergestellt werden, da eine Teilabstrahlfläche bei beiden Lichtfunktionen leuchtet.

Insbesondere sind die Teilabstrahlflächen linienförmig ausgebildet, wobei die Linien der ersten und zweiten Teilabstrahlflächen senkrecht auf der dritten Teilabstrahlfläche stehen. Dadurch lässt sich der Heckleuchte ein besonderes Design verleihen. Die Abstrahlflächen können dabei ineinander übergehen. Sie können aber auch separat voneinander angeordnet sein, sich also nicht berühren. Vorteilhafterweise erhält das Fahrzeug dann einen hohen Wiedererkennungswert.

Bevorzugt werden von der ersten und zweiten Teilabstrahlfläche im Wesentlichen horizontale Lichtlinien erzeugt. Von der dritten Teilabstrahlfläche wird dann im Wesentlichen ein vertikale Lichtlinie erzeugt. Dies kann z.B. beinhalten, dass mehrere Lichtquellen nebeneinander oder untereinander angeordnet sind und auf diese Weise horizontale bzw. vertikale Lichtlinien erzeugt werden. Mit dem Begriff im Wesentlichen wird ausgedrückt, dass die Lichtlinien nicht vollständig horizontal oder vertikal verlaufen müssen. Es können auch Teilbereiche der horizontalen Linien schräg oder vertikal verlaufen, sowie Teilbereiche der vertikalen Linien schräg oder horizontal verlaufen können. Auch dies führt zu einem hohen Wiedererkennungswert des Fahrzeugs aufgrund eines besonderen Designs. Auch die Signalwirkung ist dadurch besonders hoch, da eine Formveränderung der leuchtenden Abstrahlflächen durch eine Richtungsänderung um 90° besonders auffällig ist.

Insbesondere werden zumindest die von der ersten Teilabstrahlfläche erzeugten horizontalen Lichtlinien durch nebeneinander angeordnete Unterteilabstrahlflächen erzeugt und/oder die vertikale Lichtlinie der dritten Teilabstrahlfläche wird von untereinander angeordneten Unterteilabstrahlflächen erzeugt. Es können auch eine Vielzahl von Unterteilabstrahlflächen angeordnet sein, wobei zumindest zwei Abstrahlflächen der Vielzahl von Abstrahlflächen die erste, zweite und/oder dritte Teilabstrahlfläche bilden können. Beispielsweise sind die Abstrahlflächen matrixförmig in Reihen und Spalten angeordnet. Vertikale Lichtlinien können dann durch Lichtemission von Spalten der matrixförmig angeordneten Abstrahlflächen und horizontale Lichtlinien von Reihen der matrixförmig angeordneten Abstrahlflächen erzeugt werden. Vorteilhafterweise können durch beliebige Kombinationen der Abstrahlflächen eine Vielzahl von Signaturen für unterschiedliche Fahrzeugfunktionen auf einfache Art und Weise erzeugt werden.

In einer Ausbildung des erfindungsgemäßen Verfahrens wird die erste Teilabstrahlfläche von einer ersten Menge von Unterteilabstrahlflächen erzeugt und die dritte Teilabstrahlfläche von einer zweiten Menge von Unterteilabstrahlflächen erzeugt. Dabei ist zumindest eine Unterteilabstrahlfläche Teilmenge der ersten und der zweiten Menge von Unterteilabstrahlflächen. Dies bedeutet, dass die erste und die zweite Teilabstrahlfläche zumindest teilweise von den selben Unterteilabstrahlflächen erzeugt werden können. Unterteilabstrahlflächen die nur zu einer der beiden Mengen gehören, werden dann beim Umschaltvorgang ein bzw. ausgeschaltet.

Insbesondere wird von zumindest einem Teil der zweiten Teilabstrahlfläche drei Lichtlinien erzeugt, wobei die drei Lichtlinien derart angeordnet sind, dass der zumindest eine Teil der zweiten Teilabstrahlfläche eine u-förmige Lichtemission erzeugt. Dabei ist die Ausrichtung der u-Form beliebig. Die u-Form kann nach oben, unten, seitlich oder einer Kombination von oben, unten oder seitlich geöffnet sein. Dabei ermöglicht die u-förmige Lichtemission einen hohen Wiedererkennungswert des Fahrzeugs.

Gemäß einer weiteren Ausbildung des erfindungsgemäßen Verfahrens wird der Umschaltvorgang in Abhängigkeit von einem Signal ausgeführt und die Intensität der Lichtemission über die zweite Teilabstrahlfläche in Abhängigkeit von dem Signal erhöht, wobei die Intensität der Lichtemission genauso hoch ist wie die Intensität der Lichtemission über die dritte Teilabstrahlfläche. Dies kombiniert eine mögliche Formveränderung der leuchtenden Abstrahlflächen mit einer erhöhten Intensität der Lichtemission. Dies führt vorteilhafterweise zu einer besonders hohen Signalwirkung.

Das Signal ist insbesondere einer durch einen Bremsvorgang hervorgerufenen Verzögerung des Fahrzeugs zugeordnet, wobei die erste Lichtfunktion eine Schlusslichtfunktion und die zweite Lichtfunktion eine Bremslichtfunktion ist.

Gemäß einer weiteren Ausbildung des erfindungsgemäßen Verfahrens umfasst die dritte Teilabstrahlfläche zumindest zwei Unterteilabstrahlflächen. Weiterhin wird die zweite Lichtfunktion in Abhängigkeit von dem Signal in zwei Stufen unterteilt. Bei Erreichen der ersten Stufe wird die zweite Lichtfunktion von der zweiten Teilabstrahlfläche und der ersten Unterteilabstrahlfläche der dritten Teilabstrahlfläche erzeugt. Bei Erreichen der zweiten Stufe wird die zweite Lichtfunktion zusätzlich von der zweiten Unterteilabstrahlfläche der dritten Teilabstrahlfläche erzeugt, so dass die zweite Lichtfunktion gemeinsam von der zweiten Teilabstrahlfläche und der ersten und zweiten Unterteilabstrahlfläche der dritten Teilabstrahlfläche erzeugt wird. Dies führt dazu, dass die Signalwirkung des Bremslichtes in unterschiedliche Gefahrenstufen unterteilt wird. Je nach Bremsstärke können Fahrer nachfolgender Fahrzeuge beurteilen, wie groß die Gefahr ist, aufgrund derer gebremst wird. Sie können vorteilhafterweise schnell beurteilen, ob es sich bei dem Bremsvorgang um einen normalen Bremsvorgang oder eine Vollbremsung handelt und selbst entsprechend handeln.

Insbesondere wird die zweite Lichtfunktion in drei Stufen in Abhängigkeit von der Verzögerung unterteilt, wobei bei Erreichen der dritten Stufe die optischen Komponenten derart angesteuert werden, dass über die zweite Teilabstrahlfläche und über die erste und zweite Unterteilabstrahlfläche der dritten Teilabstrahlfläche pulsierend Licht emittiert wird und/oder eine Warnblinklichtfunktion des Fahrzeugs eingeschaltet wird. In dieser Ausbildung wird sichergestellt, dass das Bremslicht bei einer Vollbremsung eine besonders hohe Signalwirkung aufweist.

Die Erfindung betrifft weiterhin eine Vorrichtung zum Steuern einer Heckleuchte für ein Fahrzeug, wobei die Heckleuchte optische Komponenten mit Abstrahlflächen mit zumindest drei Teilabstrahlflächen umfasst und wobei über die Lichtemission der Abstrahlflächen zumindest eine erste und eine zweite Lichtfunktion erzeugbar ist. Die Vorrichtung umfasst eine Steuervorrichtung, mittels welcher die Lichtemission über die Teilabstrahlflächen steuerbar ist. Die Vorrichtung ist dadurch gekennzeichnet, dass mittels der Steuervorrichtung die optischen Komponenten derart ansteuerbar sind, dass nach einem Umschaltvorgang von der ersten auf die zweite Lichtfunktion die erste Teilabstrahlfläche, die für die erste Lichtfunktion Licht emittiert, kein Licht mehr emittiert, die zweite Teilabstrahlfläche, die für die erste Lichtfunktion Licht emittiert, weiterhin Licht emittiert und die dritte Teilabstrahlfläche, die für die erste Lichtfunktion kein Licht emittiert, Licht emittiert. Die Vorrichtung ist insbesondere dazu ausgebildet, das erfindungsgemäße Verfahren durchzuführen und weist daher alle Vorteile des Verfahrens auf.

Gemäß einer Ausgestaltung der erfindungsgemäßen Vorrichtung umfassen die optischen Komponenten Leuchtdioden. Im Vergleich zu herkömmlich verwendeten Lichtquellen, wie zum Beispiel Glühlampen, weisen Leuchtdioden eine höhere Lebensdauer und eine bessere Energieeffizienz auf, was sich in reduzierten Wartungskosten niederschlägt. Außerdem ist die Verwendung von Leuchtdioden beim Bremslicht besonders vorteilhaft, da sie schneller ansprechen als herkömmlich verwendete Lichtquellen. Nachfolgende Verkehrsteilnehmer werden daher schneller auf eine Situation aufmerksam, die eine Bremsreaktion erfordert.

Weiterhin betrifft die Erfindung ein Fahrzeug mit einer solchen Vorrichtung.

Die Erfindung wird nun anhand eines Ausführungsbeispiels mit Bezug zu den Zeichnungen erläutert.
- Figur 1: zeigt ein Ausführungsbeispiel einer erfindungsgemäßen Vorrichtung,
- Figur 2: zeigt die Heckansicht eines Fahrzeugs mit der in Figur 1 gezeigten erfindungsgemäßen Vorrichtung 1,
- Figuren 3a bis 3c: zeigen die Signaturen der Heckleuchte bei unterschiedlichen Bremsstufen,
- Figur 4: zeigt ein Diagramm des Ablaufs eines ersten Ausführungsbeispiels des erfindungsgemäßen Verfahrens,
- Figur 5: zeigt ein Diagramm des Ablaufs eines zweiten Ausführungsbeispiels des erfindungsgemäßen Verfahrens,
- Figur 6: zeigt eine Ausgestaltung der Heckleuchte sowie mit dieser Ausgestaltung der Heckleuchte erzeugbare Signaturen und
- Figur 7: zeigt eine weitere Ausgestaltung der Heckleuchte sowie mit dieser Ausgestaltung der Heckleuchte erzeugbare Signaturen.

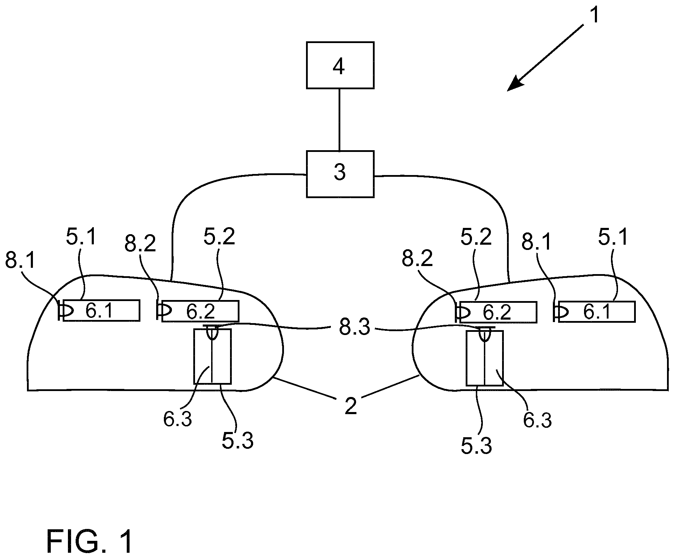

Mit Bezug zu Figur 1 wird ein Ausführungsbeispiel der erfindungsgemäßen Vorrichtung 1 beschrieben:
Die erfindungsgemäße Vorrichtung 1 umfasst zwei Heckleuchten 2, die wiederum mehrere optische Komponenten 5 und 8 umfassen. Die optischen Komponenten 5 und 8 umfassen Lichtleiter 5 und Leuchtdioden 8. Die Leuchtdioden 8 koppeln Licht in die Lichtleiter 5 ein. Die Auskoppelflächen der Lichtleiter 5 dienen als Abstrahlfläche 6 der Heckleuchten 2. Die Abstrahlfläche 6 ist in drei Teilabstrahlflächen 6.1, 6.2 und 6.3 unterteilt. Die optischen Komponenten 5 sind weiterhin so angeordnet, dass die Teilabstrahlflächen 6.1 und 6.2 der Lichtleiter 5.1 und 5.2 Licht als horizontale Linien abstrahlen. Die Teilabstrahlfläche 6.3 hingegen ist so angeordnet, dass sie Licht als vertikale Linie abstrahlt. Die Teilabstrahlflächen 6.1 und 6.2 stehen also senkrecht auf der Teilabstrahlfläche 6.3. Die Teilabstrahlflächen 6.1, 6.2 und 6.3 sind ferner separat voneinander angeordnet, sie berühren sich also nicht.

Die Heckleuchte 2 erzeugt als erste Lichtfunktion eine Schlusslichtfunktion und als zweite Lichtfunktion eine Bremslichtfunktion. Die Schlusslichtfunktion wird dabei von den optischen Komponenten 5.1, 8.1, 5.2 und 8.2 erzeugt. Die Bremslichtfunktion wird von den optischen Komponenten 5.2, 8.2, 5.3 und 8.3 erzeugt. Die freie Fläche unter der Teilabstrahlfläche 6.1 kann mit anderen Lichtfunktionen besetzt sein. Beispielsweise kann dort ein Fahrtrichtungsanzeiger oder eine Nebelschlussleuchte angebracht sein.

Weiterhin umfasst die Vorrichtung 1 eine Signalerzeugungsvorrichtung 4. Diese ist im konkreten Ausführungsbeispiel ein Bremspedal. Bei Betätigung des Bremspedals 4 wird ein Signal erzeugt, das einen Umschaltvorgang von der Schlusslichtfunktion auf die Bremslichtfunktion bewirkt. Das Bremspedal 4 ist über eine Steuervorrichtung 3 mit den Heckleuchten 2 verbunden. Die optischen Komponenten 8 der Heckleuchten 2 werden also in Abhängigkeit von dem über das Bremspedal 4 erzeugte Signal über die Steuervorrichtung 3 angesteuert.

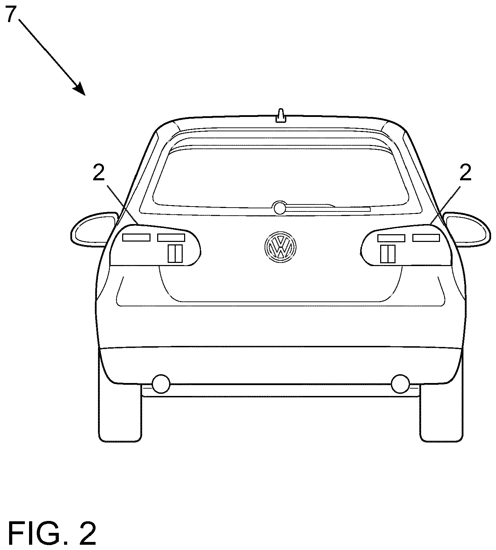

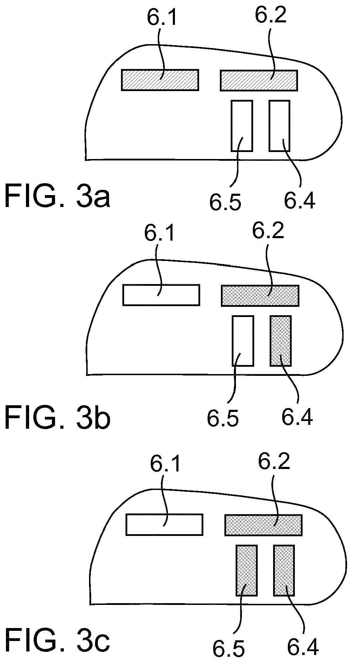

Figur 2 zeigt ein Fahrzeug 7, mit einer erfindungsgemäßen Vorrichtung 1 aus der Heckansicht. Dabei wird deutlich, dass die erfindungsgemäße Vorrichtung 1 ein besonderes Design der Heckleuchte 2 erlaubt. Figur 3a zeigt eine leicht abgeänderte Ausgestaltung der Heckleuchte 2. Dabei ist die Teilabstrahlfläche 6.3 nochmals in zwei separat voneinander angeordneten Unterteilabstrahlflächen 6.4 und 6.5 unterteilt.

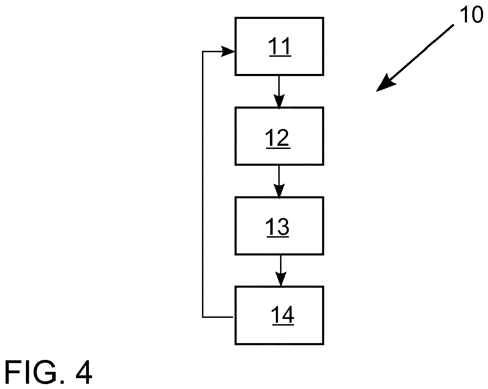

Mit Bezug zu den Figuren 3 und 4 wird ein erstes Ausführungsbeispiel des erfindungsgemäßen Verfahrens beschrieben. Dabei werden für das erste Ausführungsbeispiel die beiden Unterteilabstrahlflächen als eine Teilabstrahlfläche 6.3 angesehen. Die Schraffuren in Figur 3a, 3b und 3c deuten dabei leuchtende Teilabstrahlflächen 6 an. Die dichteren Schraffuren in den Figuren 3b und 3c bezeichnen dabei eine höhere Lichtintensität.

Zu Beginn des Verfahrens 10 im Verfahrensschritt 11 leuchten die Teilabstrahlflächen 6.1 und 6.2 als Schlusslichtfunktion des Fahrzeugs 7, wie es in Figur 3a gezeigt ist.

Tritt der Fahrer des Fahrzeugs 7 auf das Bremspedal 4, so wird in Schritt 12 ein Signal erzeugt. In Schritt 13 wird das in Schritt 12 erzeugte Signal an die Steuervorrichtung 3 geleitet, die im Schritt 14 dann wiederum die optischen Komponenten 8 der Heckleuchten 2 ansteuert. Im Falle des Verfahrens 10 wird die Leuchtdiode 8.1, die Licht in den Lichtleiter 5.1 einkoppelt, ausgeschaltet. Die Teilabstrahlfläche 6.1, die ursprünglich einen Teil der Schlusslichtfunktion erzeugt hat, emittiert demnach kein Licht mehr nach außen. Gleichzeitig wird die Leuchtdiode 8.3, die Licht in die Lichtleiter 5.3 einkoppelt, angeschaltet. Dabei wird die Intensität der Leuchtdiode 8.3 höher eingestellt als die Intensität der Leuchtdioden 8.1 und 8.2, wenn sie eine Schlusslichtfunktion bereitstellen. Die Intensität der Leuchtdiode 8.2, die Licht in den Lichtleiter 5.2 einkoppelt, wird gleichzeitig erhöht. Dadurch leuchtet die Teilabstrahlfläche 6.2 als Teil der Bremslichtfunktion heller als als Teil der Schlusslichtfunktion. Die Signatur der Heckleuchte 2 bei aktiviertem Bremslicht ist in Figur 3b bzw. 3c gezeigt.

Nimmt der Fahrer des Fahrzeugs 7 seinen Fuß von dem Bremspedal 4, wird die Ausgangslichtverteilung aus Figur 3a wieder hergestellt und das Verfahren beginnt wieder bei Schritt 11.

Das Verfahren 10 stellt die einfachste Variante des erfindungsgemäßen Verfahrens dar.

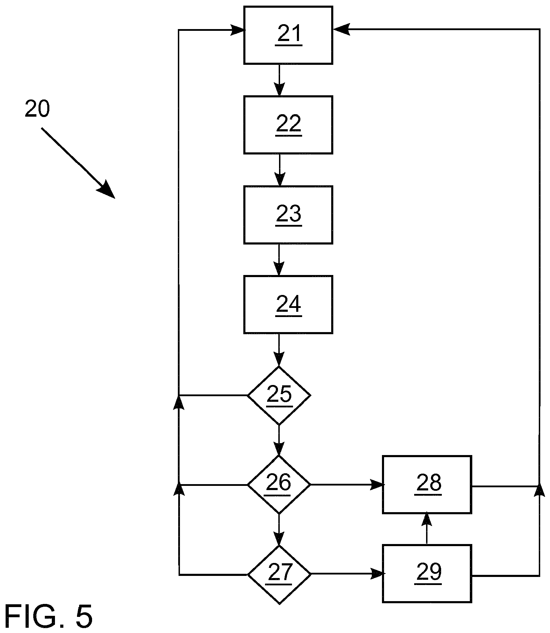

Mit Bezug zu den Figuren 3 und 5 wird ein weiteres Ausführungsbeispiel des erfindungsgemäßen Verfahrens beschrieben. Dabei handelt es sich um ein dreistufiges Bremslicht.

Schritt 21 ist dabei äquivalent zu dem Schritt 11 des Verfahrens 10.

In Schritt 22 wird durch ein Treten auf das Bremspedal 4 ein Signal erzeugt, welches in Zusammenhang mit der Verzögerung des Fahrzeugs 7 steht. Dabei werden zwei Verzögerungswerte festgelegt, ab denen jeweils eine nächste Stufe des Bremslichts angeschaltet wird. Dabei ist der ersten Stufe ein erster Verzögerungswert zugeordnet, beispielsweise der Wert 3 m/s². Stufe eins ist dann solange aktiv, bis dieser Verzögerungswert überschritten wird. Dann wird Stufe zwei aktiviert, der ebenso ein Verzögerungswert zugeordnet ist, der höher ist als der erste Verzögerungswert, beispielsweise der Wert 6 m/s². Stufe zwei wiederum ist solange aktiv, bis der zweite Verzögerungswert überschritten wird. Danach wird Stufe drei aktiviert. Die Verzögerungswerte, bei denen die verschiedenen Stufen aktiviert werden sollen, sind in der Steuervorrichtung 3 abgespeichert. Die Steuervorrichtung 3 steuert die verschiedenen Leuchtdioden 8 mittels Pulsweitenmodulation an.

Im Schritt 23 wird die Verzögerung des Fahrzeugs 7 ermittelt. In Schritt 24 vergleicht die Steuervorrichtung 3 den ermittelten Verzögerungswert mit dem hinterlegten Verzögerungswert.

Im Schritt 25 steuert die Steuervorrichtung 3 die Leuchtdioden 8 derart an, dass die Leuchtdiode 8.1 ausgeschaltet wird, während die Leuchtdiode 8.4 eingeschaltet wird. Dabei wird die Intensität der Leuchtdiode 8.4 derart eingestellt, dass sie höher als die Intensität der Leuchtdioden 8.1 und 8.2 im Betrieb der Schlusslichtfunktion ist. Weiterhin wird die Intensität der Leuchtdiode 8.2 auf den Wert der Leuchtdiode 8.4 erhöht. Die Signatur der Heckleuchte 2 in diesem Schritt ist aus Figur 3b ersichtlich.

Nach Schritt 25 kann je nach Verhalten des Fahrers entweder mit Schritt 21 oder mit Schritt 26 fortgefahren werden.

Handelt es sich bei dem Bremsvorgang lediglich um ein leichtes, kurzes Bremsen, das heißt der Fahrer nimmt seinen Fuß wieder von der Bremse, so erfährt das Fahrzeug 7 keine Verzögerung mehr, die bremskraftbedingt ist. Es wird die Schlusslichtfunktion aus Schritt 21 wieder hergestellt. Dadurch wird einem Fahrer eines nachfolgenden Fahrzeugs signalisiert, dass der Grund für den eingeleiteten Bremsvorgang nicht mehr gegeben ist.

Tritt der Fahrer des Fahrzeugs 7 im Laufe des Bremsvorganges stärker auf das Bremspedal 4, so dass der Verzögerungswert zwischen 3 m/s² und 6 m/s² liegt, wird im Schritt 26 zusätzlich zu den Leuchtdioden 8.2 und 8.4 die Leuchtdiode 8.5 in der gleichen Intensität der Leuchtdioden 8.2 und 8.4 eingeschaltet. Dadurch ist die Signalwirkung des Bremslichts höher als bei einem Verzögerungswert unterhalb von 3 m/s².

Das Verfahren kann nach Schritt 26 je nach Verhalten des Fahrers des Fahrzeugs 7 entweder mit Schritt 28, Schritt 21 oder Schritt 27 fortfahren.

Verringert der Fahrer des Fahrzeugs 7 den Druck auf das Bremspedal 4, so wird zwar weiterhin verzögert, der Verzögerungswert sinkt aber wieder unter 3 m/s². In Schritt 28 wird dann die gleiche Bremssignatur hergestellt wie in Schritt 25. Es wird also die Leuchtdiode 8.5 abgeschaltet, so dass über die Unterteilabstrahlfläche 6.5 des Lichtleiters 5.5 kein Licht mehr abgestrahlt wird. Es wird also wie in Schritt 25 nur noch über die Teilabstrahlfläche 6.2 und die Unterteilabstrahlfläche 6.4 die Signatur des Bremslichtes erzeugt.

Nimmt der Fahrer des Fahrzeugs 7 komplett den Druck vom Bremspedal 4, so erfährt das Fahrzeug 7 keine Verzögerung mehr. Es wird also wieder die Schlusslichtfunktion aus Schritt 21 hergestellt und somit das Verfahren von vorne begonnen.

Schritt 27 wird dann eingeleitet, wenn der Fahrer des Fahrzeugs 7 so fest auf das Bremspedal 4 tritt, dass der Verzögerungswert über den Wert 6 m/s² steigt. Dies ist z.B. bei einer Vollbremsung der Fall. Die Leuchtdioden 8.2, 8.4 und 8.5, die in Schritt 27 eingeschaltet sind, werden dann derart angesteuert, dass sie eine pulsierende Lichtemission abgeben. Dadurch ist eine Signalwirkung besonders hoch. Alternativ oder zusätzlich kann die Warnblinkfunktion des Fahrzeugs 7 eingeschaltet werden.

Nach Schritt 27 kann das Verfahren je nach Verhalten des Fahrers des Fahrzeugs 7 entweder mit Schritt 21 oder Schritt 29 fortfahren.

Schritt 21 wird dann eingeleitet, wenn der Fahrer des Fahrzeugs 7 seinen Fuß von dem Bremspedal 4 nimmt und somit das Fahrzeug 7 keine weitere Verzögerung aufgrund von Bremskraft erfährt. Die Schlusslichtfunktion wird wieder eingeschaltet.

Schritt 29 wird eingeleitet, wenn der Fahrer des Fahrzeugs 7 den Druck auf das Bremspedal 4 verringert, bis der Verzögerungswert wieder unter den Wert 6 m/s² fällt. Die pulsierende Lichtemission der Leuchtdioden 8.2, 8.4 und 8.5 wird ausgeschaltet. Gegebenenfalls wird auch die Warnblinklichtfunktion ausgeschaltet. Nach Schritt 29 folgt nun entweder Schritt 28 oder Schritt 21.

Liegt der ermittelte Verzögerungswert bereits zu Beginn des Bremsvorganges oberhalb des ersten Verzögerungswertes, so wird Schritt 25 des Verfahrens 20 übersprungen, und sogleich die Signatur aus Figur 3c eingestellt.

Erfolgt von Anfang eine Vollbremsung, so wird der ermittelte Verzögerungswert bereits zu Beginn des Bremsvorganges über dem zweiten Verzögerungswert liegen. Dann werden die Schritte 25 und 26 des Verfahrens 20 übersprungen und sogleich eine pulsierende Lichtemission eingestellt.

Ein erfindungsgemäßes Verfahren kann natürlich auch lediglich zweistufig sein. Stufe drei des Verfahrens kann z.B. ausgelassen werden, so dass keine pulsierende Lichtemission bei einer Vollbremsung eingestellt wird. Alternativ kann auch Schritt 25 des Verfahrens 20 allgemein ausgelassen werden.

Alternativ kann die Teilabstrahlfläche 6.3 auch in mehr als zwei Unterteilabstrahlflächen aufgeteilt sein, beispielsweise in drei Unterteilabstrahlflächen. So können dann beispielsweise in Stufe 1 eine mittlere Unterteilabstrahlfläche und in der zweiten Stufe eine rechte und eine linke Unterteilabstrahlfläche gemeinsam mit der zweiten Teilabstrahlfläche die zweite Lichtfunktion erzeugen.

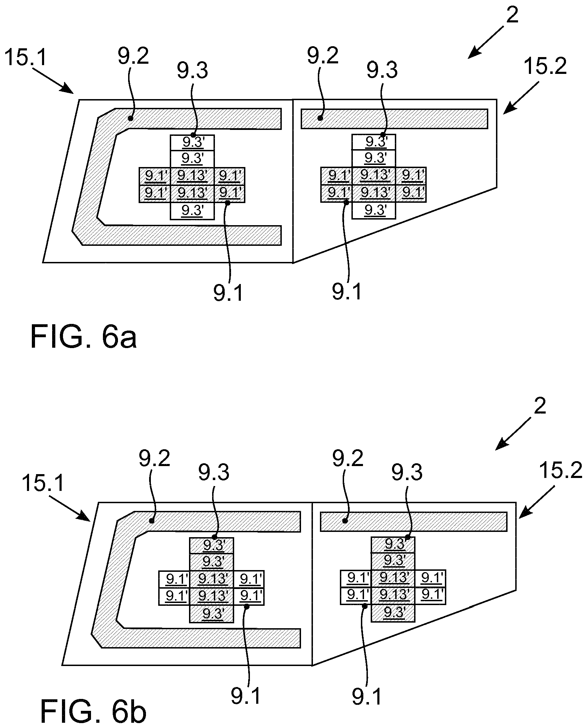

Mit Bezug zu den Figuren 6a und 6b wird eine weitere Ausgestaltung der Heckleuchte 2 erläutert.

Dabei dienen wiederum Auskoppelflächen von Lichtleitern 5 als Abstrahlfläche 9 der Heckleuchte 2.

Die Heckleuchte 2 ist zweiteilig ausgebildet. Der erste Teil 15.1 ist beispielsweise auf einem beweglichen Teil des Fahrzeughecks, beispielsweise einem Kofferraumdeckel oder einer Heckklappe, und der zweite Teil 15.2 auf einem nicht beweglichen Teil, beispielsweise direkt neben dem Kofferraumdeckel oder der Heckklappe, angeordnet.

Der erste Teil 15.1 umfasst mehrere Teilabstrahlflächen 9.1 bis 9.3, welche beispielweise durch Leuchtdioden (nicht gezeigt), wie in den vorhergehenden Beispielen erläutert, erleuchtet werden.

Die Teilabstrahlfläche 9.2 ist dabei derart ausgebildet, dass sie im ersten Teil 15.1 eine u-Form und im Teil 15.2 eine Linie bildet. Die u-Form wiederum umfasst dabei zwei im Wesentlichen horizontal parallel zueinander verlaufende Abschnitte und einen im Wesentlichen vertikal, leicht schräg von unten nach oben verlaufenden Abschnitt, der die zwei im Wesentlichen horizontal zueinander verlaufende Abschnitte miteinander verbindet. Die u-Form ist daher seitlich geöffnet.

Die Teilabstrahlfläche 9.1 bildet in beiden Teilen 15.1 und 15.2 einen im Wesentlichen horizontal verlaufenden breiten Streifen. Dieser kann beispielsweise durch mehrere, übereinander angeordnete Unterteilabstrahlflächen 9.1' und 9.13' gebildet werden. Die Teilabstrahlfläche 9.3 wird von den Unterteilabstrahlflächen 9.3' und 9.13' gebildet. Sie bilden einen vertikal verlaufenden Streifen.

Die zwei Teile 15.1 und 15.2 der Heckleuchte 2 werden gleichzeitig betrieben, so dass die Heckleuchte 2 die in den Figuren 6a und 6b gezeigten Signaturen der Heckleuchte 2 erzeugt.

In Figur 6a ist eine Signatur einer Schlusslichtfunktion gezeigt. Dabei wird über die Teilabstrahlflächen 9.1 und 9.2 Licht nach außen abgestrahlt. Die Teilabstrahlfläche 9.3 leuchtet im Betrieb der Schlusslichtfunktion nicht. Die Teilabstrahlfläche 9.1 wird weiterhin aus den Unterteilabstrahlflächen 9.1' und 9.13' zusammengesetzt.

Wird über das Bremspedal ein Umschaltvorgang von der Schlusslichtfunktion auf die Bremslichtfunktion bewirkt, wird eine Signatur, wie sie in Figur 6b gezeigt ist, erzeugt. Die Unterteilabstrahlflächen 9.1' der Teilabstrahlfläche 9.1 emittieren kein Licht mehr. Die Unterteilabstrahlflächen 9.13' emittieren weiterhin Licht, da sie auch der Teilabstrahlfläche 9.3 zugeordnet sind. Zudem emittieren die Unterteilabstrahlflächen 9.3' Licht. Die Lichtintensität der Unterteilabstrahlflächen 9.13' sowie der Teilabstrahlfläche 9.2 können dann an die Lichtintensität der hinzugeschalteten Unterteilabstrahlflächen 9.3' angepasst werden.

Die Bremslichtfunktion wird gemeinsam von den Teilabstrahlfläche 9.2 und 9.3 bereitgestellt.

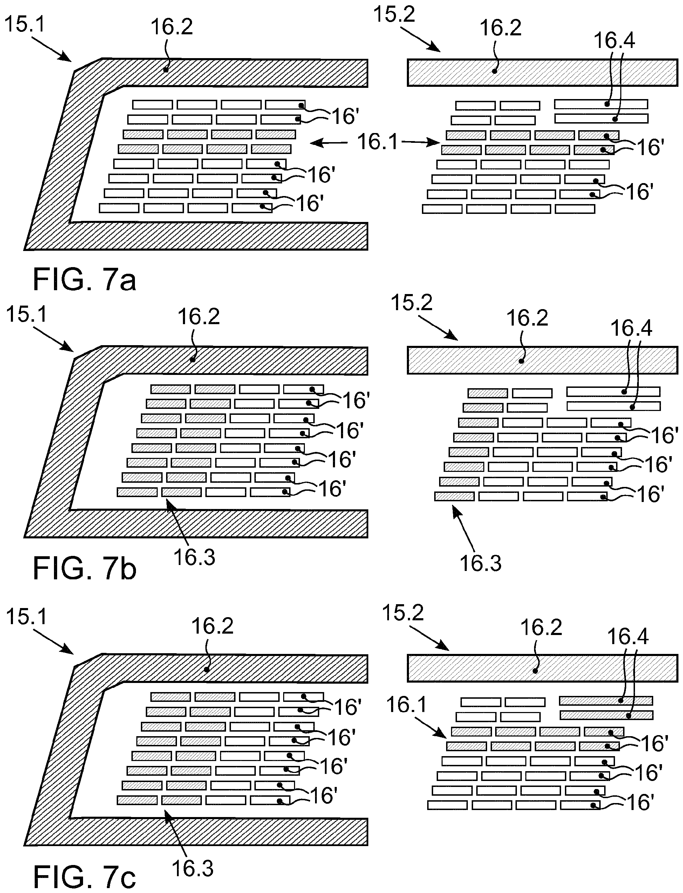

Mit Bezug zu den Figuren 7a bis 7c wird eine weitere Ausgestaltung der Heckleuchte 2 bei unterschiedlichen Lichtfunktionen erläutert.

Dabei dienen wiederum Auskoppelflächen von Lichtleitern 5 als Abstrahlfläche 16 der Heckleuchte 2.

Die Heckleuchte 2 ist wie in der Ausgestaltung der Figuren 6a und 6b zweiteilig. Der erste Teil 15.1 ist wiederum an einem beweglichen Teil des Fahrzeughecks angeordnet, während der Teil 15.2 an einem unbeweglichen Teil des Fahrzeughecks angeordnet ist.

In dem ersten Teil 15.1 und in dem zweiten Teil 15.2 der Heckleuchte 2 können Teilabstrahlflächen 16.1, 16.2 und 16.3 Licht emittieren.

Die Teilabstrahlfläche 16.2 im ersten Teil 15.1 ist dabei wiederum u-förmig und im zweiten Teil 15.2 als Linie ausgebildet.

In dem ersten 15.1 und zweiten Teil 15.2 der Heckleuchte 2 ist eine Vielzahl von Unterteilabstrahlflächen 16' angeordnet. Diese sind in acht Reihen und vier leicht zueinander versetzten Spalten angeordnet. Teilabstrahlflächen 16.2 und 16.3 können dann über beliebige Kombinationen lichtemittierender Unterteilabstrahlflächen 16' erzeugt werden.

Im zweiten Teil 15.2 der Heckleuchte 2 sind zudem zwei Teilabstrahlflächen 16.4 angeordnet. Diese emittieren dann Licht, wenn eine Nebelschlusslichtfunktion eingeschaltet wird.

Figur 7a zeigt eine von der Heckleuchte 2 erzeugbare Schlusslichtfunktion. Die Signatur der Schlusslichtfunktion wird beispielsweise dadurch erzeugt, dass die Teilabstrahlfläche 16.2 Licht emittiert. Die Teilabstrahlfläche 16.1 wird dadurch erzeugt, dass die Unterteilabstrahlflächen 16' der Reihen drei und vier in beiden Teilen 15.1 und 15.2 der Heckleuchte 2 Licht emittieren.

Die Signatur des Schlusslichts setzt sich demnach im ersten Teil 15.1 aus einer u-Form, welche durch die Teilabstrahlfläche 16.2 und zwei horizontal verlaufende Lichtlinien, welche durch die Teilabstrahlfläche 16.1 erzeugt werden, zusammen.

Wird über das Bremspedal ein Umschaltvorgang von der Schlusslichtfunktion auf die Bremslichtfunktion bewirkt, wird eine Signatur, wie sie in Figur 7b gezeigt ist, erzeugt. Die Teilabstrahlfläche 16.2 emittiert nach wie vor Licht. Dabei kann wiederum die Lichtintensität, mit der die Teilabstrahlfläche 16.2 Licht emittiert, gemäß dem erläuterten Verfahren angepasst werden.

Im ersten Teil 15.1 der Heckleuchte 2 werden die zwei horizontal verlaufenden Lichtlinien, welche von der Teilabstrahlfläche 16.2 erzeugt werden, nicht mehr erzeugt. Stattdessen emittiert die Teilabstrahlfläche 16.3 Licht. Die Teilabstrahlfläche 16.3 wird im ersten Teil 15.1 der Heckleuchte 2 über die Unterteilabstrahlflächen 16' der ersten und zweiten Spalte von links zusammengesetzt. Es entstehen daher zwei leicht schräg von oben nach unten verlaufende Lichtstreifen. Zudem wird die Teilabstrahlfläche 16.3 wie bereits im vorausgegangenen Beispiel teilweise von den selben Unterteilabstrahlflächen 16' erzeugt wie die Teilabstrahlfläche 16.1.

Auch im zweiten Teil 15.2 der Heckleuchte 2 werden die zwei horizontal verlaufenden Lichtlinien nicht mehr erzeugt. Stattdessen emittiert die Teilabstrahlfläche 16.3 Licht. Die Teilabstrahlfläche 16.3 des zweiten Teils 15.2 wird durch die Unterteilabstrahlflächen 16' lediglich der ersten Spalte von links zusammengesetzt.

Alternativ kann die Signatur der Heckleuchte 2 auch der in der Figur 7c gezeigten Signatur entsprechen. Diese Signatur entspricht einer Kombination der Signaturen der Schlusslichtfunktion und der Bremslichtfunktion der Figuren 7a und 7b. Die Schlusslichtfunktion wird dabei nicht gänzlich ausgeschaltet. Vielmehr wird die Signatur der Schlusslichtfunktion aus dem zweiten Teil 15.2 der Heckleuchte 2, wie sie in Figur 7a gezeigt ist, beibehalten. Der erste Teil 15.1 der Heckleuchte 2 weist die Signatur der Bremslichtfunktion, wie sie im ersten Teil 15.1 der Heckleuchte 2 in Figur 7b gezeigt ist, auf. Dabei können wiederum die Lichtintensitäten der Teilabstrahlflächen 16.1 und 16.2 der Schlusslichtfunktion verändert werden.

Ist zusätzlich die Nebelschlusslichtfunktion eingeschaltet emittieren auch die Teilabstrahlflächen 16.4 Licht. Auch dies ist in Figur 7c gezeigt.

Im vorliegenden Beispiel werden für die Erzeugung der Signaturen nicht alle in der Heckleuchte verbauten Unterteilabstrahlflächen 16' verwendet. Diese nicht verwendeten Unterteilabstrahlflächen 16' können beispielsweise für andere Lichtfunktionen verwendet werden. Alternativ kann die Heckleuchte 2 Unterteilabstrahlflächen 16' in der Anzahl und Anordnung aufweisen, welche für die Erzeugung der gewünschten Signaturen notwendig sind. Für das Beispiel der Figuren 7a bis 7c bedeutet dies, dass die Heckleuchte nur die Unterteilabstrahlflächen 16' aufweist, welche an der Erzeugung der Signatur der Schlusslichtfunktion gezeigt in Figur 7a, der Signatur der Bremslichtfunktion gezeigt in Figur 7b oder der Kombination der Schlusslicht- und Bremslichtfunktion sowie der Nebelschlusslichtfunktion der Figur 7c beteiligt sind.

### Bezugszeichenliste

- 1: Vorrichtung
- 2: Heckleuchten
- 3: Steuervorrichtung
- 4: Bremspedal
- 5: optische Komponenten
- 6, 9, 16: Abstrahlflächen
- 6.1, 9.1, 16.1: erste Teilabstrahlflächen
- 6.2, 9.2, 16.2: zweite Teilabstrahlflächen
- 6.3, 9.3, 16.3: dritte Teilabstrahlflächen
- 7: Fahrzeug
- 8: Leuchtdioden
- 9.1', 9.13', 9.3': Unterteilabstrahlflächen
- 10: Verfahren
- 11-14: Verfahrensschritte
- 16': Unterteilabstrahlflächen
- 16.4: vierte Teilabstrahlflächen
- 20: Verfahren
- 21-29: Verfahrensschritte

## Patentansprüche

1. Verfahren zum Steuern einer Lichtemission einer Heckleuchte (2) eines Fahrzeugs (7), wobei die Heckleuchte (2) optische Komponenten (5, 8) mit Abstrahlflächen (6) mit zumindest drei Teilabstrahlflächen (6.1, 9.1, 16.1, 6.2, 9.2, 16.2, 6.3, 9.3, 16.3) umfasst und wobei über die Lichtemission der Abstrahlflächen (6, 9, 16) zumindest eine erste und eine zweite Lichtfunktion erzeugbar ist, wobei als erste Lichtfunktion eine Schlusslichtfunktion und als zweite Lichtfunktion eine Bremslichtfunktion erzeugbar ist,
**dadurch gekennzeichnet, dass**
nach einem Umschaltvorgang von der ersten auf die zweite Lichtfunktion die erste Teilabstrahlfläche (6.1, 9.1, 16.1), die für die erste Lichtfunktion Licht emittiert, kein Licht mehr emittiert, die zweite Teilabstrahlfläche (6.2, 9.2, 16.2), die für die erste Lichtfunktion Licht emittiert, weiterhin Licht emittiert und die dritte Teilabstrahlfläche (6.3, 9.3, 16.3), die für die erste Lichtfunktion kein Licht emittiert, Licht emittiert.

2. Verfahren nach Anspruch 1,
**dadurch gekennzeichnet, dass**
die Teilabstrahlflächen (6.1 bis 6.3, 9.1 bis 9.3, 16.1 bis 16.3) linienförmig ausgebildet sind, wobei die Linien der ersten und zweiten Teilabstrahlflächen (6.1, 9.1, 16.1, 6.2, 9.2, 16.2) senkrecht auf der dritten Teilabstrahlfläche (6.3, 6.4, 9.3, 16.3) stehen.

3. Verfahren nach Anspruch 1 oder 2,
**dadurch gekennzeichnet, dass**
von der ersten und zweiten Teilabstrahlfläche (6.1, 6.2, 9.2, 16.2) im Wesentlichen horizontale Lichtlinien erzeugt werden und von der dritten Teilabstrahlfläche (6.3) im Wesentlichen eine vertikale Lichtlinie erzeugt wird.

4. Verfahren nach Anspruch 3,
**dadurch gekennzeichnet, dass**
zumindest die von der ersten Teilabstrahlfläche (9.1, 16.1) erzeugten horizontalen Lichtlinien durch nebeneinander angeordnete Unterteilabstrahlflächen (9.1', 16') erzeugt werden und/oder die vertikale Lichtlinie der dritten Teilabstrahlfläche von untereinander angeordneten Unterteilabstrahlflächen (9.3', 16') erzeugt wird.

5. Verfahren nach einem der vorhergehenden Ansprüche,
**dadurch gekennzeichnet, dass**
die erste Teilabstrahlfläche (9.1, 16.1) von einer ersten Menge von Unterteilabstrahlflächen (9.1', 9.13') erzeugt wird und die dritte Teilabstrahlfläche (9.3, 16.3) von einer zweiten Menge von Unterteilabstrahlflächen (9.3', 9.13') erzeugt wird, wobei zumindest eine Unterteilabstrahlfläche (9.13') Teilmenge der ersten (9.1', 9.13') und der zweiten Menge von Unterteilabstrahlflächen (9.3, 9.13') ist.

6. Verfahren nach einem der vorhergehenden Ansprüche,
**dadurch gekennzeichnet, dass**
von zumindest einem Teil der zweiten Teilabstrahlfläche (9.2, 16.2) drei Lichtlinien erzeugt werden, wobei die drei Lichtlinien derart angeordnet sind, dass der eine Teil der ersten Teilabstrahlfläche (9.2, 16.2) eine u-förmige Lichtemission erzeugt.

7. Verfahren nach Anspruch einem der vorhergehenden Ansprüche,
**dadurch gekennzeichnet, dass**
der Umschaltvorgang in Abhängigkeit von einem Signal ausgeführt wird und die Intensität der Lichtemission über die zweite Teilabstrahlfläche (6.2, 9.2, 16.2) in Abhängigkeit von dem Signal erhöht wird, wobei die Intensität der Lichtemission genauso hoch ist wie die Intensität der Lichtemission über die dritte Teilabstrahlfläche (6.3, 9.3, 16.3).

8. Verfahren nach Anspruch 7,
**dadurch gekennzeichnet, dass**
das Signal einer durch einen Bremsvorgang hervorgerufenen Verzögerung des Fahrzeugs (7) zugeordnet ist, wobei die erste Lichtfunktion eine Schlusslichtfunktion und die zweite Lichtfunktion eine Bremslichtfunktion ist.

9. Verfahren nach Anspruch 8,
**dadurch gekennzeichnet, dass**
- die dritte Teilabstrahlfläche (6.3) zumindest zwei Unterteilabstrahlflächen (6.4, 6.5) umfasst,
- die zweite Lichtfunktion in Abhängigkeit von der Verzögerung des Fahrzeugs (7) in zwei Stufen unterteilt wird,
- bei Erreichen der ersten Stufe die zweite Lichtfunktion von der zweiten Teilabstrahlfläche (6.2) und der ersten Unterteilabstrahlfläche (6.4) der dritten Teilabstrahlfläche (6.3) erzeugt wird und
- bei Erreichen der zweiten Stufe die zweite Lichtfunktion zusätzlich von der zweiten Unterteilabstrahlfläche (6.5) der dritten Teilabstrahlfläche (6.3) erzeugt wird, so dass die zweite Lichtfunktion gemeinsam von der zweiten Teilabstrahlfläche (6.2) und der ersten (6.4) und zweiten Unterteilabstrahlfläche (6.5) der dritten Teilabstrahlfläche (6.3) erzeugt wird.

10. Verfahren nach Anspruch 9,
**dadurch gekennzeichnet, dass**
die zweite Lichtfunktion in drei Stufen in Abhängigkeit von der Verzögerung unterteilt wird, wobei bei Erreichen der dritten Stufe die optischen Komponenten (5, 8) derart angesteuert werden, dass über die zweite Teilabstrahlfläche (6.2) und über die erste und zweite Unterteilabstrahlfläche (6.4, 6.5) der dritten Teilabstrahlfläche (6.3) pulsierend Licht emittiert wird und/oder eine Warnblinklichtfunktion des Fahrzeugs (7) eingeschaltet wird.

11. Vorrichtung (1) zum Steuern einer Lichtemission einer Heckleuchte (2) eines Fahrzeugs (7), wobei die Heckleuchte (2) optische Komponenten (5, 8) mit Abstrahlflächen (6) mit zumindest drei Teilabstrahlflächen (6.1, 9.1, 16.1, 6.2, 9.2, 16.2, 6.3, 9.3, 16.3) umfasst und wobei über die Lichtemission der Abstrahlflächen (6, 9, 16) zumindest eine erste und eine zweite Lichtfunktion erzeugbar ist, mit einer Steuervorrichtung (3), mittels welcher die Lichtemission über die Teilabstrahlflächen (6.1, 9.1, 16.1, 6.2, 9.2, 16.2, 6.3, 9.3, 16.3) steuerbar ist, wobei als erste Lichtfunktion eine Schlusslichtfunktion und als zweite Lichtfunktion eine Bremslichtfunktion erzeugbar ist,
**dadurch gekennzeichnet, dass**
mittels der Steuervorrichtung (3) die optischen Komponenten (8) derart ansteuerbar sind, dass nach einem Umschaltvorgang von der ersten auf die zweite Lichtfunktion die erste Teilabstrahlfläche (6.1, 9.1, 16.1), die für die erste Lichtfunktion Licht emittiert, kein Licht mehr emittiert, die zweite Teilabstrahlfläche (6.2, 9.2, 16.2), die für die erste Lichtfunktion Licht emittiert, weiterhin Licht emittiert und die dritte Teilabstrahlfläche (6.3, 9.3 ,16.3), die für die erste Lichtfunktion kein Licht emittiert, Licht emittiert.

12. Vorrichtung (1) nach Anspruch 11,
**dadurch gekennzeichnet, dass**
die optischen Komponenten Leuchtdioden (8) umfassen.

13. Fahrzeug (7) mit einer Vorrichtung (1) nach Anspruch 11 oder 12.

## Claims

1. Method for controlling a light emission of a rear light (2) of a vehicle (7), wherein the rear light (2) comprises optical components (5, 8) with emitting surfaces (6) with at least three partial emitting surfaces (6.1, 9.1, 16.1, 6.2, 9.2, 16.2, 6.3, 9.3, 16.3) and wherein at least a first and a second light function can be generated via the light emission of the emitting surfaces (6, 9, 16), wherein a tail light function can be generated as the first light function and a brake light function can be generated as the second light function,
**characterized in that**
after a switchover from the first to the second light function, the first partial emitting surface (6.1, 9.1, 16.1), which emits light for the first light function, no longer emits light, the second partial emitting surface (6.2, 9.2, 16.2), which emits light for the first light function, continues to emit light, and the third partial emitting surface (6.3, 9.3, 16.3), which emits no light for the first light function, emits light.

2. Method according to Claim 1,
**characterized in that**
the partial emitting surfaces (6.1 to 6.3, 9.1 to 9.3, 16.1 to 16.3) have a linear form, wherein the lines of the first and second partial emitting surfaces (6.1, 9.1, 16.1, 6.2, 9.2, 16.2) are perpendicular to the third partial emitting surface (6.3, 6.4, 9.3, 16.3).

3. Method according to Claim 1 or 2,
**characterized in that**
substantially horizontal light lines are generated by the first and second partial emitting surfaces (6.1, 6.2, 9.2, 16.2) and a substantially vertical light line is generated by the third partial emitting surface (6.3).

4. Method according to Claim 3,
**characterized in that**
at least the horizontal light lines generated by the first partial emitting surface (9.1, 16.1) are generated by partial emitting surface segments (9.1', 16') arranged next to each other, and/or the vertical light line of the third partial emitting surface is generated by partial emitting surface segments (9.3', 16') arranged one below the other.

5. Method according to any one of the preceding claims,
**characterized in that**
the first partial emitting surface (9.1, 16.1) is generated by a first set of partial emitting surface segments (9.1', 9.13') and the third partial emitting surface (9.3, 16.3) is generated by a second set of partial emitting surface segments (9.3', 9.13'), wherein at least one partial emitting surface segment (9.13') is a subset of the first set of partial emitting surface segments (9.1', 9.13') and of the second set of partial emitting surface segments (9.3, 9.13').

6. Method according to any one of the preceding claims,
**characterized in that**
three light lines are generated by at least one part of the second partial emitting surface (9.2, 16.2), wherein the three light lines are arranged in such a manner that the one part of the first partial emitting surface (9.2, 16.2) generates a U-shaped light emission.

7. Method according to any one of the preceding claims,
**characterized in that**
the switchover is carried out depending on a signal and the intensity of the light emission via the second partial emitting surface (6.2, 9.2, 16.2) is increased depending on the signal, wherein the intensity of the light emission is just as high as the intensity of the light emission via the third partial emitting surface (6.3, 9.3, 16.3).

8. Method according to Claim 7,
**characterized in that**
the signal is assigned to a deceleration of the vehicle (7) caused by a braking operation, wherein the first light function is a tail light function and the second light function is a brake light function.

9. Method according to Claim 8,
**characterized in that**
- the third partial emitting surface (6.3) comprises at least two partial emitting surface segments (6.4, 6.5),
- the second light function is divided into two stages depending on the deceleration of the vehicle (7),
- upon the first stage being reached, the second light function is generated by the second partial emitting surface (6.2) and the first partial emitting surface segment (6.4) of the third partial emitting surface (6.3), and
- upon the second stage being reached, the second light function is additionally generated by the second partial emitting surface segment (6.5) of the third partial emitting surface (6.3) so that the second light function is jointly generated by the second partial emitting surface (6.2) and the first partial emitting surface segment (6.4) and the second partial emitting surface segment (6.5) of the third partial emitting surface (6.3).

10. Method according to Claim 9,
**characterized in that**
the second light function is divided into three stages depending on the deceleration, wherein upon the third stage being reached, the optical components (5, 8) are controlled such that light is emitted in a pulsating manner via the second partial emitting surface (6.2) and via the first and second partial emitting surface segments (6.4, 6.5) of the third partial emitting surface (6.3) and/or a hazard light function of the vehicle (7) is turned on.

11. Device (1) for controlling a light emission of a rear light (2) of a vehicle (7), wherein the rear light (2) comprises optical components (5, 8) with emitting surfaces (6) with at least three partial emitting surfaces (6.1, 9.1, 16.1, 6.2, 9.2, 16.2, 6.3, 9.3, 16.3) and wherein at least a first and a second light function can be generated via the light emission of the emitting surfaces (6, 9, 16), with a control device (3) by means of which the light emission via the partial emitting surfaces (6.1, 9.1, 16.1, 6.2, 9.2, 16.2, 6.3, 9.3, 16.3) can be controlled, wherein a tail light function can be generated as the first light function and a brake light function can be generated as the second light function,
**characterized in that,**
by means of the control device (3), the optical components (8) can be controlled such that, after a switchover from the first to the second light function, the first partial emitting surface (6.1, 9.1, 16.1), which emits light for the first light function, no longer emits light, the second partial emitting surface (6.2, 9.2, 16.2), which emits light for the first light function, continues to emit light, and the third partial emitting surface (6.3, 9.3, 16.3), which does not emit light for the first light function, emits light.

12. Device (1) according to Claim 11,
**characterized in that**
the optical components comprise light-emitting diodes (8).

13. Vehicle (7) with a device (1) according to Claim 11 or 12.

## Revendications

1. Procédé pour la commande d'une émission lumineuse d'un feu arrière (2) d'un véhicule (7), le feu arrière (2) comprenant des composants optiques (5, 8) présentant des surfaces émettrices (6) pourvues d'au moins trois surfaces émettrices partielles (6.1, 9.1, 16.1, 6.2, 9.2, 16.2, 6.3, 9.3, 16.3) et au moins une première et une deuxième fonction d'éclairage pouvant être générées via l'émission lumineuse des surfaces émettrices (6, 9, 16), une fonction de feu arrière pouvant être générée comme première fonction d'éclairage et une fonction de feu de stop pouvant être générée comme deuxième fonction d'éclairage,
**caractérisé en ce que,**
après un processus de commutation de la première à la deuxième fonction d'éclairage, la première surface émettrice partielle (6.1, 9.1, 16.1), qui émet de la lumière pour la première fonction d'éclairage, n'émet plus de lumière, la deuxième surface émettrice partielle (6.2, 9.2, 16.2), qui émet de la lumière pour la première fonction d'éclairage, continue à émettre de la lumière et la troisième surface émettrice partielle (6.3, 9.3, 16.3), qui n'émet pas de lumière pour la première fonction d'éclairage, émet de la lumière.

2. Procédé selon la revendication 1,
**caractérisé en ce que**
les surfaces émettrices partielles (6.1 à 6.3, 9.1 à 9.3, 16.1 à 16.3) sont réalisées sous forme de lignes, les lignes de la première et de la deuxième surface émettrice partielle (6.1, 9.1, 16.1, 6.2, 9.2, 16.2) étant perpendiculaires à la troisième surface émettrice partielle (6.3, 6.4, 9.3, 16.3).

3. Procédé selon la revendication 1 ou 2,
**caractérisé en ce que**
des lignes lumineuses essentiellement horizontales sont générées par la première et la deuxième surface émettrice partielle (6.1, 6.2, 9.2, 16.2) et une ligne lumineuse essentiellement verticale est générée par la troisième surface émettrice partielle (6.3).

4. Procédé selon la revendication 3,
**caractérisé en ce que**
au moins les lignes lumineuses horizontales générées par la première surface émettrice partielle (9.1, 16.1) sont générées par des sous-surfaces émettrices partielles (9.1', 16') disposées les unes à côté des autres et/ou la ligne verticale de la troisième surface émettrice partielle est générée par des sous-surfaces émettrices partielles (9.3', 16') disposées les unes en dessous des autres.

5. Procédé selon l'une quelconque des revendications précédentes,
**caractérisé en ce que**
la première surface émettrice partielle (9.1, 16.1) est générée par une première quantité de sous-surfaces émettrices partielles (9.1', 9.13') et la troisième surface émettrice partielle (9.3, 16.3) est générée par une deuxième quantité de sous-surfaces émettrices partielles (9.3', 9.13'), au moins une sous-surface émettrice partielle (9.13') étant une quantité partielle de la première (9.1' 9.13') et de la deuxième quantité de sous-surfaces émettrices partielles (9.3, 9.13').

6. Procédé selon l'une quelconque des revendications précédentes,
**caractérisé en ce que**
trois lignes lumineuses sont générées par au moins une partie de la deuxième surface émettrice partielle (9.2, 16.2), les trois lignes lumineuses étant disposées de telle façon que ladite une partie de la première surface émettrice partielle (9.2, 16.2) génère une émission lumineuse en forme de U.

7. Procédé selon l'une quelconque des revendications précédentes,
**caractérisé en ce que**
le processus de commutation est exécuté en fonction d'un signal et l'intensité de l'émission lumineuse via la deuxième surface émettrice partielle (6.2, 9.2, 16.2) est augmentée en fonction du signal, l'intensité de l'émission lumineuse étant égale à l'intensité de l'émission lumineuse via la troisième surface émettrice partielle (6.3, 9.3, 16.3).

8. Procédé selon la revendication 7,
**caractérisé en ce que**
le signal est associé à une décélération du véhicule (7) suscitée par un processus de freinage, la première fonction d'éclairage étant une fonction de feu arrière et la deuxième fonction d'éclairage étant une fonction de feu de stop.

9. Procédé selon la revendication 8,
**caractérisé en ce que**
- la troisième surface émettrice partielle (6.3) comprend au moins deux sous-surfaces émettrices partielles (6.4, 6.5),
- la deuxième fonction d'éclairage est divisée en deux niveaux en fonction de la décélération du véhicule (7),
- lors de l'atteinte du première niveau, la deuxième fonction d'éclairage est générée par la deuxième surface émettrice partielle (6.2) et par la première sous-surface émettrice partielle (6.4) de la troisième surface émettrice partielle (6.3) et
- lors de l'atteinte du deuxième niveau, la deuxième fonction d'éclairage est générée en outre par la deuxième sous-surface émettrice partielle (6.5) de la troisième surface émettrice partielle (6.3), de telle façon que la deuxième fonction d'éclairage est générée conjointement par la deuxième surface émettrice partielle (6.2) et par la première (6.4) et la deuxième (6.5) sous-surface émettrice partielle de la troisième surface émettrice partielle (6.3).

10. Procédé selon la revendication 9,
**caractérisé en ce que**
la deuxième fonction d'éclairage est divisée en trois niveaux en fonction de la décélération, où, lors de l'atteinte du troisième niveau, les composants optiques (5, 8) sont commandés de telle façon qu'une lumière pulsée est émise via la deuxième surface émettrice partielle (6.2) et via la première et la deuxième sous-surface émettrice partielle (6.4, 6.5) de la troisième surface émettrice partielle (6.3) et/ou une fonction de feu de détresse du véhicule (7) est activée.

11. Dispositif (1) pour la commande d'une émission lumineuse d'un feu arrière (2) d'un véhicule (7), le feu arrière (2) comprenant des composants optiques (5, 8) présentant des surfaces émettrices (6) pourvues d'au moins trois surfaces émettrices partielles (6.1, 9.1, 16.1, 6.2, 9.2, 16.2, 6.3, 9.3, 16.3) et au moins une première et une deuxième fonction d'éclairage pouvant être générées via l'émission lumineuse des surfaces émettrices (6, 9, 16), présentant un dispositif de commande (3), au moyen duquel l'émission lumineuse via les surfaces émettrices partielles (6.1, 9.1, 16.1, 6.2, 9.2, 16.2, 6.3, 9.3, 16.3) peut être commandée, une fonction de feu arrière pouvant être générée comme première fonction d'éclairage et une fonction de feu de stop pouvant être générée comme deuxième fonction d'éclairage,
**caractérisé en ce que**
les composants optiques (8) peuvent être commandés au moyen du dispositif de commande (3) de telle façon qu'après un processus de commutation de la première à la deuxième fonction d'éclairage, la première surface émettrice partielle (6.1, 9.1, 16.1), qui émet de la lumière pour la première fonction d'éclairage, n'émet plus de lumière, la deuxième surface émettrice partielle (6.2, 9.2, 16.2), qui émet de la lumière pour la première fonction d'éclairage, continue à émettre de la lumière et la troisième surface émettrice partielle (6.3, 9.3, 16.3), qui n'émet pas de lumière pour la première fonction d'éclairage, émet de la lumière.

12. Dispositif (1) selon la revendication 11,
**caractérisé en ce que**
les composants optiques comprennent des diodes électroluminescentes (8).

13. Véhicule (7) présentant un dispositif (1) selon la revendication 11 ou 12.
